# EUROPÄISCHE PATENTSCHRIFT

(11) **EP 0 537 868 B1**
(45) Veröffentlichungstag und Bekanntmachung des Hinweises auf die Patenterteilung: **29.11.1995**
(21) Anmeldenummer: 92250220.8
(22) Anmeldetag: 21.08.1992
(51) Int. Cl.: H02G 5/00, H02B 13/035

(54) **Kompensator**
Compensation joint
Joint de compensation

(30) Priorität: 17.10.1991 DE 9113013 U
(43) Veröffentlichungstag der Anmeldung: 21.04.1993
(73) Patentinhaber: SIEMENS AKTIENGESELLSCHAFT, 80333 München (DE)
(72) Erfinder: Mahn, Gildo, W-1000 Berlin 61 (DE)

(56) Entgegenhaltungen:
- EP-A- 0 127 006
- CH-A- 588 150
- DE-A- 3 546 011
- DE-U- 7 415 129
- DE-U- 9 113 013

## Beschreibung

Die Erfindung bezieht sich auf einen Kompensator zur elektrischen Verbindung zweier Teile einer elektrischen Hochspannungsschaltanlage mit zwei einander gegenüberliegenden Kontakteinrichtungen, von denen wenigstens eine als Tulpenkontakt ausgebildet ist und mit einem starren Leiterstück, dessen Enden in den Kontakteinrichtungen aufgenommen und durch diesen zugeordnete Zentriereinrichtungen zentriert sind und das einen Versatz zwischen den Kontakteinrichtungen bedarfsweise ausgleicht, wobei wenigstens eine Zentriereinrichtung ausschließlich durch den Tulpenkontakt mit federnden Kontaktlamellen gebildet ist.

Ein Kompensator ist beispielsweise aus der Siemens Betriebsanleitung für die metallgekapselte SF₆-isolierte Schaltanlage 8D2 bekannt. Solche Kompensatoren werden zur Herstellung einer leitenden Verbindung zwischen verschiedenen Teilen einer Hochspannungsschaltanlage eingesetzt, um Verschiebungen der Teile gegeneinander, die beispielsweise aus thermischen Dehnungen resultieren, auszugleichen.

Bei dem in der Siemens Betriebsanleitung dargestellten Kompensator stehen einander zwei Tulpenkontakte gegenüber, die jeweils ein Ende eines starren Leiters aufnehmen. Bei einem Versatz der Tulpenkontakte gegeneinander senkrecht zu ihrer Verbindungsachse wird das Leiterstück verkippt und gleicht dadurch den Versatz aus. Das Leiterstück ist auf beiden Seiten in einer jeweils einem Kontakt zugeordneten Zentriereinrichtung gehalten. Dadurch ist die Lage des Leiterstücks stabilisiert und seine Verkippung begrenzt.

Aus der CH-A-588 150 ist eine Verbindungseinrichtung für zwei Teile einer Hochspannungsschaltanlage mit einandergegenüberliegenden Kontakteinrichtungen bekannt, die als Tulpenkontakt ausgebildet sind und mit einem starren Leiterstück, das in den Tulpenkontakten gehalten ist. Bei einer derartigen Verbindungseinrichtung besteht das Problem, daß im Übergangsbereich zwischen den Kontaktfingern der Tulpenkontakte und dem starren Leiterstück im Falle einer anliegenden Hochspannung wegen der unregelmäßigen Außenkontur der spannungführenden Teile sehr hohe Feldstärken auftreten, die zu Überschlägen führen können.

Der vorliegenden Erfindung liegt daher die Aufgabe zugrunde, einen Kompensator der eingangs genannten Art konstruktiv einfach derart auszubilden, daß bei anliegender Hochspannung elektrische Überschläge vermieden werden.

Die Aufgabe wird erfindungsgemäß dadurch gelöst, daß das Leiterstück auf dem Teil seiner Länge, der sich an den im Tulpenkontakt aufgenommenen Teil anschließt, eine Verdickung aufweist, die eine Fortsetzung der Außenkontur des Tulpenkontaktes bildet.

Durch diese Gestaltung des Leiterstücks wird das elektrische Feld um das Leiterstück und die Kontakte vergleichmäßigt, so daß sich eine Verbesserung der dielektrischen Festigkeit ergibt.

Eine vorteilhafte Ausgestaltung der Erfindung sieht vor, daß die Verdickung einen solchen Abstand zu dem Tulpenkontakt aufweist, daß dieser beim Verkippen des Leiterstücks nicht mit der Verdickung in Berührung kommt.

Bei einem großen Versatz zwischen den Kontaktvorrichtungen ergibt sich eine starke Verkippung des Leiterstücks, so daß dieses u. U. an eine Flanke der Verdickung des Leiterstücks anstoßen und hier einen elektrischen Kontakt bilden könnte, der parallel zum Hauptstrompfad liegt. Um dieses zu vermeiden, ist die Verdickung in einem entsprechenden Abstand von der Kontaktvorrichtung angeordnet.

Es kann außerdem vorteilhaft vorgesehen sein, daß im Inneren des Tulpenkontaktes eine Isolierstoffscheibe als Anschlag für das Leiterstück angeordnet ist.

Die Isolierstoffscheibe bewirkt, daß das Leiterstück nicht am Boden des Tulpenkontaktes anschlägt und hier einen zu dem durch die Kontaktlamellen gebildeten Hauptkontakt parallelen Strompfad bildet. Außerdem wird durch die Isolierstoffscheibe verhindert, daß das Leiterstück so weit in einen Tulpenkontakt hineinrutscht, daß seine Verdickung mit den Kontaktlamellen in Berührung kommt.

Außerdem kann die Erfindung vorteilhaft dadurch ausgestaltet werden, daß der Tulpenkontakt durch eine durch dessen Boden verschraubte Metallscheibe festgeklemmt und kontaktiert ist.

Der Tulpenkontakt weist in einer besonders einfachen Herstellungsform an seinem den Kontaktlamellen abgewandten Ende einen nach innen umgebördelten Rand auf. Auf diesem Rand liegt eine in den Tulpenkontakt eingelegte, durch eine zentrische Schraube oder mehrere einen Lochkranz durchsetzende Schrauben befestigte metallische Scheibe auf. Durch diese metallische Scheibe wird der Boden des Tulpenkontaktes an ein weiterführendes Anschlußteil angedrückt und so der elektrische Kontakt zum Tulpenkontakt hergestellt. Die Metallscheibe kann einerseits vom Inneren des Tulpenkontaktes her durch eine zentrische Schraube befestigt werden, andererseits kann sie auch mehrere nicht zentrisch angeordnete Gewindebohrungen aufweisen und von der den Kontaktlamellen des Tulpenkontaktes gegenüberliegenden Seite aus festgeschraubt werden.

Das Leiterstück besteht vorteilhaft aus Kupfer.

Im folgenden wird die Erfindung anhand eines Ausführungsbeispiels in einer Zeichnung gezeigt und anschließend beschrieben.

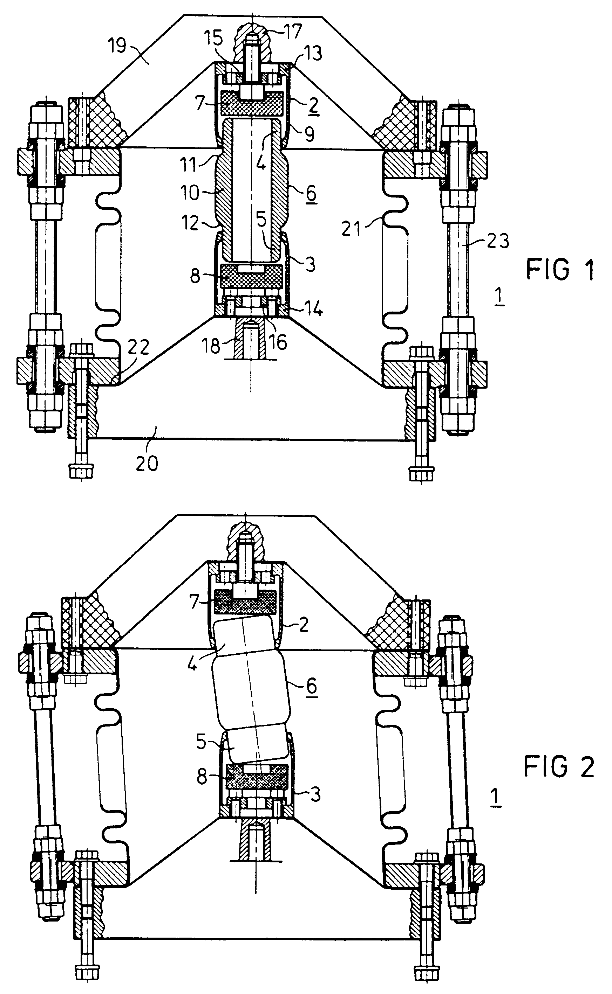

Dabei zeigt
Figur 1 einen Kompensator im Querschnitt ohne einen Versatz der Tulpenkontakte gegeneinander,
Figur 2 einen Kompensator wie in Figur 1 mit einem Versatz der Tulpenkontakte gegeneinander.

Die Figuren zeigen jeweils einen Kompensator 1 mit zwei einander im Abstand gegenüberstehenden Tulpenkontakten 2, 3.

Die Enden 4, 5 eines starren Leiterstücks 6 sind jeweils in einem der Tulpenkontakte 2, 3 aufgenommen. Die Enden 4, 5 des Leiterstücks 6 sind jeweils vom Boden der Tulpenkontakte durch eine Isolierstoffscheibe 7, 8 beabstandet. Die Tulpenkontakte 2, 3 weisen jeweils federnde Kontaktlamellen 9 auf, die je ein Ende 2, 3 des Leiterstücks 6 federnd zwischen sich aufnehmen. Das Leiterstück 6 weist entlang seiner Mittelachse in seinem mittleren Bereich außen eine Verdickung 10 auf, die die äußere Kontur der Tulpenkontakte 2, 3 im wesentlichen fortsetzt. Dadurch werden die elektrisch günstigen Bedingungen zur Vermeidung von Überschlägen geschaffen.

Durch die Isolierstoffscheiben 7, 8 wird das Leiterstück 6 mit den Flanken 11, 12 seiner Verdickung 10 soweit von den Kontaktlamellen 9 entfernt gehalten, daß durch eine Verkippung des Leiterstücks 10 keine Berührung zwischen den Flanken 11, 12 der Verdickung und den Lamellen 9 auftreten kann.

Die Tulpenkontakte 2, 3 weisen jeweils an ihrem den Kontaktlamellen 9 abgewandten Ende einen Innenflansch 13, 14 auf, der außer zur Stabilisierung des Tulpenkontaktes auch zu dessen Befestigung dient. Der Tulpenkontakt wird durch eine an seinem Boden gegen den Flansch 13, 14 gedrückte Metallscheibe 15, 16, die mit einem Anschlußstück 17, 18 verschraubt ist, eingeklemmt. Dadurch wird der Tulpenkontakt einerseits mechanisch befestigt, andererseits elektrisch kontaktiert.

Der Kompensator ist einerseits stirnseitig durch jeweils einen Stützisolator 19, 20 gasdicht abgeschlossen und mechanisch abgestützt, andererseits im Bereich seiner Mantelfläche durch einen Metallbalg 21 gasdicht abgeschlossen. Der Metallbalg 21 schließt durch Gummidichtungen 22 gasdicht mit den Stützisolatoren 19, 20 ab. Der Metallbalg 21 ist in der Lage, Versatzbewegungen der Kontaktvorrichtungen zu kompensieren. Außen ist der Metallbalg durch Zuganker 23 stabilisiert, so daß er unter der Einwirkung eines erhöhten Löschgasdrucks in seinem Inneren nicht expandiert. Auch die Zuganker 23 sind, durch die Verwendung von kugeligen Unterlegscheiben, kippbar ausgeführt.

Außerdem sind außen am Kompensator nicht dargestellte stromleitende Bleche vorgesehen, die eine Kompensationsbewegung ebenfalls mitmachen können und die für die Stromrückführung des Gehäusestroms sorgen, um eine Erwärmung der Bauteile des Kompensators zu vermeiden.

## Patentansprüche

1. Kompensator (1) zur elektrischen Verbindung zweier Teile einer elektrischen Hochspannungsschaltanlage mit zwei einander gegenüberliegenden Kontakteinrichtungen (2,3), von denen wenigstens eine als Tulpenkontakt (2,3) ausgebildet ist und mit einem starren Leiterstück (6), dessen Enden (4,5) in den Kontakteinrichtungen (2,3) aufgenommen und durch diesen zugeordnete Zentriereinrichtungen zentriert sind und das einen Versatz zwischen den Kontakteinrichtungen bedarfsweise ausgleicht, wobei wenigstens eine Zentriereinrichtung ausschließlich durch den Tulpenkontakt (2, 3) mit federnden Kontaktlamellen (9) gebildet ist,
**dadurch gekennzeichnet**, daß
das Leiterstück (6) auf dem Teil seiner Länge, der sich an den im Tulpenkontakt (2,3) aufgenommenen Teil anschließt, eine Verdickung (10) aufweist, die eine Fortsetzung der Außenkontur des Tulpenkontaktes (2,3) bildet.

2. Kompensator nach Anspruch 1,
**dadurch gekennzeichnet**, daß
die Verdickung (10) einen solchen Abstand zu dem Tulpenkontakt (2,3) aufweist, daß dieser beim Verkippen des Leiterstücks (6) nicht mit der Verdickung (10) in Berührung kommt.

3. Kompensator nach Anspruch 1 oder einem der folgenden,
**dadurch gekennzeichnet**, daß
im Inneren des Tulpenkontakts (2,3) eine Isolierstoffscheibe (7,8) als Anschlag für das Leiterstück (6) angeordnet ist.

4. Kompensator nach Anspruch 1 oder einem der folgenden,
**dadurch gekennzeichnet**, daß
der Tulpenkontakt (2,3) durch eine durch dessen Boden verschraubte Metallscheibe (15,16) festgeklemmt und kontaktiert ist.

5. Kompensator nach Anspruch 1 oder einem der folgenden,
**dadurch gekennzeichnet**, daß
das Leiterstück (6) aus Kupfer besteht.

## Claims

1. Compensator (1) for the electrical connection of two parts of an electrical high-voltage switching station with two contact devices (2, 3) lying opposite each other, at least one of which is constructed as a tulip contact (2, 3), and with a rigid conductor element (6), the ends (4, 5) of which are accommodated in the contact devices (2, 3) and are centred by centring devices associated therewith and which compensates for a lateral displacement between the contact devices if necessary, whereby at least one centring device is formed exclusively by the tulip contact (2, 3) with resilient contact laminations (9), characterized in that the conductor element (6) has on the part of its length which connects to the part accommodated in the tulip contact (2, 3) a thick spot (10) which forms a continuation of the outer contour of the tulip contact (2, 3).

2. Compensator according to claim 1, characterized in that the thick spot (10) has such a spacing from the tulip contact (2, 3) that the latter does not come into contact with the thick spot (10) when the conductor element (6) is tilted.

3. Compensator according to claim 1 or one of the following claims, characterized in that a disc of insulating material (7, 8) is arranged as a stop for the conductor element (6) in the interior of the tulip contact (2, 3).

4. Compensator according to claim 1 or one of the following claims, characterized in that the tulip contact (2, 3) is clamped and contacted by a metal disc (15, 16) screwed through its base.

5. Compensator according to claim 1 or one of the following claims, characterized in that the conductor element (6) is made of copper.

## Revendications

1. Liaison électrique à compensation (1) entre deux parties d'une installation de coupure électrique à haute tension comportant deux dispositifs de contact (2,3) disposés en vis-à-vis l'un de l'autre et dont l'un au moins est réalisé sous la forme d'un contact en U (2,3), et comportant un élément conducteur rigide (6), dont les extrémités (4,5) sont logées dans les dispositifs de contact (2,3) et sont centrées dans des dispositifs de centrage associés à ces dispositifs et qui compense le cas échéant un décalage entre les dispositifs de contact, au moins un dispositif de centrage étant formé exclusivement par le contact en U (2,3) comportant des lamelles de contact élastiques (9),
caractérisé par le fait que l'élément conducteur (6) possède, sur une partie de sa longueur qui se raccorde à la partie logée dans le contact en U (2,3), une partie épaissie (10), qui forme un prolongement du contour extérieur du contact en U (2,3).

2. Liaison électrique à compensation suivant la revendication 1, caractérisé par le fait que la partie épaissie (10) est séparée du contact en U (2,3) par une distance telle que lors du basculement de l'élément conducteur (6), ce contact ne vient pas en contact avec la partie épaissie (10).

3. Liaison électrique à compensation suivant la revendication 1 ou l'une des suivantes, caractérisé par le fait qu'un disque en un matériau isolant (7,8) est disposé à l'intérieur du contact en U (2,3), en tant que butée pour l'élément de conducteur (6).

4. Liaison électrique à compensation suivant la revendication 1 ou l'une des suivantes, caractérisé par le fait que le contact en U (2,3) est bloqué par serrage par un disque métallique (15,16) vissé à travers son fond, et vient en contact avec ce dernier.

5. Liaison électrique à compensation suivant la revendication 1 ou l'une des suivantes, caractérisé par le fait que l'élément conducteur (6) est réalisé en cuivre.
